# EUROPEAN PATENT APPLICATION

(11) **EP 3 147 788 A1**
(43) Date of publication of application: **29.03.2017**
(21) Application number: 15860153.4
(22) Date of filing: 24.04.2015
(51) Int. Cl.: G06F 11/07

(54) **METHOD AND APPARATUS FOR IDENTIFYING MALICIOUS OPERATION IN MOBILE TERMINAL**

(30) Priority: 18.11.2014 CN 201410657992
(71) Applicant: Shenzhen Huiding Technology Co., Ltd., Shenzhen, Guangdong 518000 (CN)
(72) Inventor: SHEN, Cong, Shenzhen Guangdong 518000 (CN)
(74) Representative: Würmser, Julian
(86) International application number: PCT/CN2015/077411
(87) International publication number: WO 2016/078327

(57) **Abstract**

The present disclosure provides a method and apparatus for identifying a malicious operation in a mobile terminal. The method includes: receiving an operation of a user on a mobile terminal; prompting the user to input an operation identification code when determining that the operation on the mobile terminal matches with a predetermined suspected malicious operation; receiving the operation identification code, and determining whether the operation identification code matches with a predetermined anti-malicious operation identification code; and operating the mobile terminal to perform a predetermined operation if the operation identification code does not match with the predetermined anti-malicious operation identification code. With the method for identifying a malicious operation in a mobile terminal according to the embodiments of the present disclosure, an unauthorized user performing a malicious operation for a mobile terminal can be identified, such that the mobile terminal makes a response in time.

## Description

### TECHNICAL FIELD

The present disclosure relates to the technical field of mobile terminal manufacturing, and in particular, relates to a method and an apparatus for identifying a malicious operation in a mobile terminal.

### BACKGROUND

With the rapid development of mobile terminals, the mobile terminals are used by users more and more widely. However, if a mobile terminal of a user is lost or stolen, the stealer may perform a malicious operation in the mobile terminal, for example, recovering the mobile terminal. Since the mobile terminal subjected to a malicious operation may still be normally used, the lost or stolen mobile terminal may still be sold in the market. That is, the conventional mobile terminal may not effectively identify a malicious operation of an unauthorized user. Therefore, at present, there is still no effective mechanism to protect a mobile terminal which is subjected to a malicious operation.

### SUMMARY

The present disclosure is intended to solve at least one of the above technical problems.

In view of the above, a first objective of the present disclosure is to provide a method for identifying a malicious operation in a mobile terminal. With the method, an unauthorized user performing a malicious operation for a mobile terminal can be identified, such that the mobile terminal makes a response in time.

A second objective of the present disclosure is to provide an apparatus for identifying a malicious operation in a mobile terminal.

To achieve the above objective, a first aspect of embodiments of the present disclosure provides a method for identifying a malicious operation in a mobile terminal. The method includes: receiving an operation of a user on a mobile terminal; prompting the user to input an operation identification code when determining that the operation on the mobile terminal matches with a predetermined suspected malicious operation; receiving the operation identification code, and determining whether the operation identification code matches with a predetermined anti-malicious operation identification code; and operating the mobile terminal to perform a predetermined operation if the operation identification code does not match with the predetermined anti-malicious operation identification code.

With the method for identifying a malicious operation in a mobile terminal according to the embodiments of the present disclosure, when a mobile terminal identifies a suspected malicious operation, a user is prompted to input an operation identification code, and an unauthorized user performing a malicious operation on the mobile terminal can be identified by determining whether the operation identification code input by the user matches with a predetermined anti-malicious operation identification code. In this way, the mobile terminal makes a response in time.

To achieve the above objective, a second aspect of embodiments of the present disclosure provides an apparatus for identifying a malicious operation in a mobile terminal. The apparatus includes: a first receiving module, configured to receive an operation of a user on a mobile terminal; a prompting module, configured to prompt the user to input an operation identification code when determining that the operation on the mobile terminal matches with a predetermined suspected malicious operation; a determining module, configured to receive the operation identification code, and determine whether the operation identification code matches with a predetermined anti-malicious operation identification code; and an operating module, configured to operate the mobile terminal to perform a predetermined manner if the operation identification code does not match with the predetermined anti-malicious operation identification code.

With the apparatus for identifying a malicious operation in a mobile terminal according to the embodiments of the present disclosure, when a mobile terminal identifies a suspected malicious operation, a user is prompted to input an operation identification code, and an unauthorized user performing a malicious operation on the mobile terminal can be identified by determining whether the operation identification code input by the user matches with a predetermined anti-malicious operation identification code. In this way, the mobile terminal makes a response in time.

The additional aspects and advantages of the present disclosure are partially illustrated in the following description, and the other portions would become more obvious from the following description or would be known from the practice of the present disclosure.

### BRIEF DESCRIPTION OF THE DRAWINGS

The above described and/or additional aspects and advantages of the present disclosure would be obvious and simple to understand with reference to the description of the embodiments in combination with the accompanying drawings.
FIG. 1 is a flowchart of a method for identifying a malicious operation in a mobile terminal according to an embodiment of the present disclosure;
FIG. 2 is a flowchart of a method for identifying a malicious operation in a mobile terminal according to a specific embodiment of the present disclosure;
FIG. 3 is a schematic structural diagram of an apparatus for identifying a malicious operation in a mobile terminal according to an embodiment of the present disclosure; and
FIG. 4 is a schematic structural diagram of an apparatus for identifying a malicious operation in a mobile terminal according to a specific embodiment of the present disclosure.

### DETAILED DESCRIPTION

The embodiments of the present disclosure are described in detail hereinafter. Examples of the described embodiments are given in the accompanying drawings, wherein the identical or similar reference numerals constantly denote the identical or similar elements or elements having the identical or similar functions. The specific embodiments described with reference to the attached drawings are all exemplary, and are intended to illustrate and interpret the present disclosure, which shall not be construed as causing limitations to the present disclosure. On the contrary, the embodiments of the present disclosure cover all the variations, modifications and equivalents made within the spirit and scope as defined by the appended claims of the present disclosure.

A method and apparatus for identifying a malicious operation in a mobile terminal according to the embodiments of the present disclosure are described hereinafter with reference to the accompanying drawings.

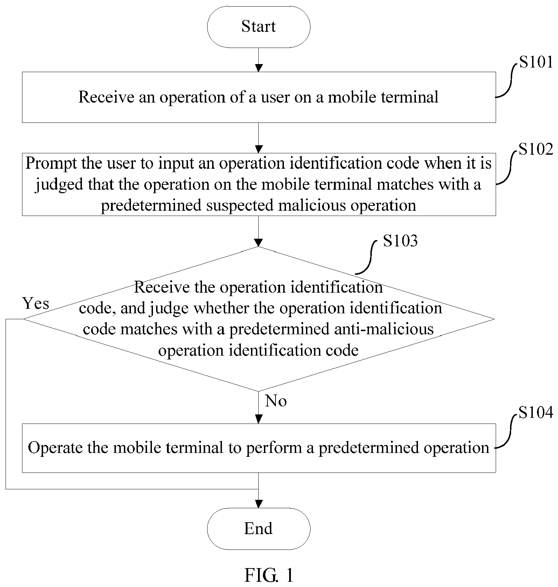

FIG. 1 is a flowchart of a method for identifying a malicious operation in a mobile terminal according to an embodiment of the present disclosure. As illustrated in FIG. 1, the method for identifying a malicious operation in a mobile terminal includes the following steps:
In the S101: an operation of a user on a mobile terminal is received.

Specifically, the mobile terminal may include, but not limited to, a mobile phone, a tablet computer, a lap-top computer and a PDA.

In the S102: the user is prompted to input an operation identification code when determining that the operation on the mobile terminal matches with a predetermined suspected malicious operation.

In an embodiment of the present disclosure, the predetermined suspected malicious operation includes, but not limited to, one of initially starting the mobile terminal, resetting the mobile terminal, upgrading the mobile terminal, updating a system of the mobile terminal and modifying a habitual operation on the mobile terminal.

Specifically, upon receiving an operation of a user, the mobile terminal determines whether the operation performed by the user for the mobile terminal is a suspected malicious operation. To be specific, the mobile terminal may match the operation performed by the user with a pre-stored suspected malicious operation in the mobile terminal, such that the mobile terminal identifies whether the operation performed by the user is a suspected malicious operation. If the mobile terminal identifies that the operation performed by the user for the mobile terminal is initially starting the mobile terminal, resetting the mobile terminal, upgrading the mobile terminal, selecting to updating the system of the mobile terminal, modifying the habitual operation of the mobile terminal (for example, assuming an authorized user generally unlocks the mobile terminal by using an authorized fingerprint A, and if the mobile terminal identifies that an unauthorized fingerprint B is used for unlocking the mobile terminal, the mobile terminal determines that a habitual operation of the user on the mobile terminal has been modified), or recovering the mobile terminal, the mobile terminal prompts the user to input the operation identification code to authenticate identity of the user.

In the S103: the operation identification code is received, and it is determined whether the operation identification code matches with a predetermined anti-malicious operation identification code.

In an embodiment of the present disclosure, the anti-malicious operation identification code includes, but not limited to, one of a fingerprint, a living fingerprint, and an iris of an authorized user, as well as one or any combination of a digit, a letter and a symbol.

To be specific, the mobile terminal may match the operation identification code input by the user with the predetermined anti-malicious operation identification code, to determine whether the user performing a suspected operation for the mobile terminal is an authorized user. The predetermined anti-malicious operation identification code may be pre-stored in the mobile terminal, and more particularly, stored in a secure space of the mobile terminal. That is, the predetermined anti-malicious operation identification code is stored in a storage space that cannot be accessed or destroyed by a malicious operation; in other words, stored in a storage space for which an unauthorized user may be incapable of performing any adding, deleting or modifying operation. Hence, it can be ensured that the predetermined anti-malicious operation identification code would not suffer lost, being deleted or destroyed.

For example, the mobile terminal receives an input fingerprint of a user, and then compares the input fingerprint with an authorized user fingerprint that is pre-stored in a secure space of the mobile terminal. If the input fingerprint and the authorized user fingerprint do not match, the mobile terminal determines that the user is an unauthorized user, that is, the user performing a suspected malicious operation for the mobile terminal is an unauthorized user. Alternatively, the mobile terminal receives an input password of a user, and then compares the input password with a pre-stored password in a secure space of the mobile terminal. If the two passwords match, the mobile terminal determines that the user performing a suspected malicious operation for the mobile terminal is an authorized user.

It should be understood that the mobile terminal may not only determine whether the user is an unauthorized user by identifying whether the fingerprints match, but also identify identity of the user by using other biometrics, such as an iris and the like of the user.

In the S104: the mobile terminal performs a predetermined operation if the operation identification code does not match with the predetermined anti-malicious operation identification code.

In an embodiment of the present disclosure, the predetermined operation includes, but not limited to, one of automatic shutdown, pop-up alarming and sending information of an unauthorized user.

Specifically, if the mobile terminal determines that the operation identification code input by the user does not match with the predetermined anti-malicious operation identification code, it indicates that an unauthorized user has performed a malicious operation for the mobile terminal. In this case, the mobile terminal may perform a predetermined operation in time. For example, the mobile terminal may be automatically shut off, or the mobile terminal may pop up an alert box to the user or automatically sends information of the unauthorized user to the authorized user. The information of the unauthorized user includes, but not limited to, identity information, geographic location information, mobile phone number, fingerprint information or the like of the unauthorized user. The recipient of the information of the unauthorized user sent by the mobile terminal may be an authorized user of the mobile terminal, a designated receiving apparatus/mobile terminal or the like of the mobile terminal.

With the method for identifying a malicious operation in a mobile terminal according to the embodiments of the present disclosure, when a mobile terminal identifies a suspected malicious operation, a user is prompted to input an operation identification code, and an unauthorized user performing a malicious operation on the mobile terminal can be identified by determining whether the operation identification code input by the user matches with a predetermined anti-malicious operation identification code. In this way, the mobile terminal makes a response in time.

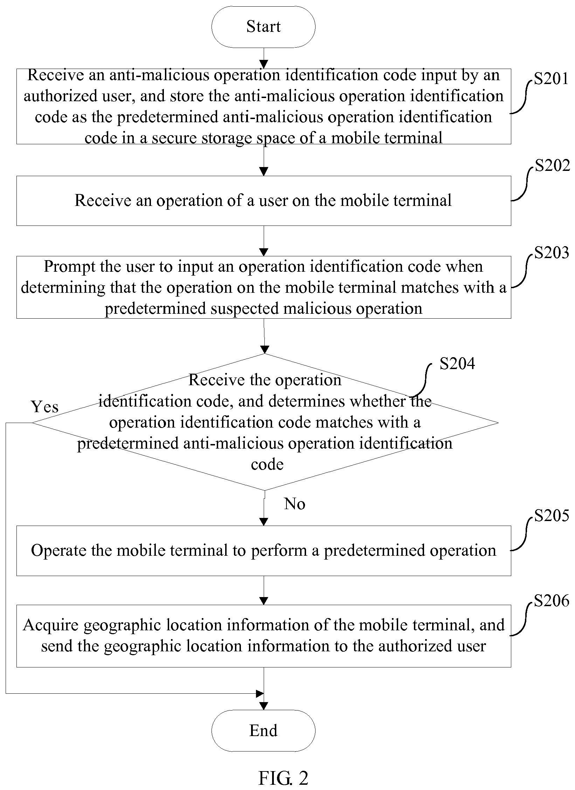

FIG. 2 is a flowchart of a method for identifying a malicious operation in a mobile terminal according to a specific embodiment of the present disclosure. As illustrated in FIG. 2, the method for identifying a malicious operation in a mobile terminal includes the following steps:
In the S201: an anti-malicious operation identification code input by an authorized user is received, and the anti-malicious operation identification code is stored as a predetermined anti-malicious operation identification code in a secure storage space of a mobile terminal.

Specifically, the mobile terminal may prompt the authorized user to register one or more anti-malicious operation identification codes when the system is ensured to be secure. For example, when the anti-malicious function is not activated or a security mechanism of the mobile terminal determines that the mobile terminal is secure, the mobile terminal prompts the authorized user to register an authorized fingerprint or input a password. Afterwards, the mobile terminal may store the anti-malicious operation identification code registered by the authorized user in a secure storage space of the mobile terminal. The secure storage space refers to a space which would not suffer lost, being deleted or destroyed when the mobile terminal is maliciously operated. For example, if the anti-malicious operation identification code registered by the authorized user is a fingerprint, the fingerprint of the authorized user may be stored in a storage device of a fingerprint chip.

In addition, the mobile terminal may also send the anti-malicious operation identification code registered by the authorized user to a server of a service provider or a system provider for storage. When the mobile terminal receives an operation identification code input by a user performing a suspected malicious operation for the mobile terminal, the mobile terminal may download the anti-malicious operation identification code from the server for matching and authentication.

In the S202: an operation of a user on the mobile terminal is received.

Specifically, the mobile terminal may include, but not limited to, a mobile phone, a tablet computer, a lap-top computer and a PDA.

In the S203: the user is prompted to input an operation identification code when determining that the operation on the mobile terminal matches with a predetermined suspected malicious operation.

In an embodiment of the present disclosure, the predetermined suspected malicious operation includes, but not limited to, one of initially starting the mobile terminal, resetting the mobile terminal, upgrading the mobile terminal, updating a system of the mobile terminal and modifying a habitual operation on the mobile terminal.

In the S204: the operation identification code is received, and it is determined whether the operation identification code matches with a predetermined anti-malicious operation identification code.

In an embodiment of the present disclosure, the anti-malicious operation identification code includes, but not limited to, one of a fingerprint, a living fingerprint and an iris of an authorized user, as well as one or any combination of a digit, a letter and a symbol.

In the S205: the mobile terminal is perform a predetermined operation if the operation identification code does not matches with the predetermined anti-malicious operation identification code.

In an embodiment of the present disclosure, the predetermined operation includes, but not limited to, one of automatic shutdown, pop-up alarming and automatically sending information of an unauthorized user.

In the S206: geographic location information of the mobile terminal is acquired, and the geographic location information is sent to the authorized user.

Specifically, if the mobile terminal determines that the operation identification code does not match with the predetermined anti-malicious operation identification code, that is, an unauthorized user has just performed a suspected malicious operation for the mobile terminal, the mobile terminal may acquire geographic location coordinates of the mobile terminal by using, for example, a GPS module, and send the geographic location coordinates of the mobile terminal to the authorized user in various ways. For example, the mobile terminal sends the geographic location coordinates to the server of the service provider or system provider, and the server pushes the geographic location coordinates to the authorized user via, for example, a secure email; or the mobile terminal may directly edit, in the mobile terminal, a secure email including the geographic location coordinates, or notify the geographic location coordinates to the authorized user via a short message or the like. As such, the authorized user may acquire the current geographic location of the mobile terminal.

With the method for identifying a malicious operation in a mobile terminal according to the embodiment of the present disclosure, a mobile terminal acquires geographic location information of the mobile terminal and sends the geographic location information to a server, and the server pushes the geographic location information to an authorized user. As such, the authorized user may timely acquire relevant information of the mobile terminal after the mobile terminal is missing or stolen, and a malicious operation is performed on the mobile terminal by an unauthorized user.

To practice the above embodiments, the present disclosure further provides an apparatus for identifying a malicious operation in a mobile terminal.

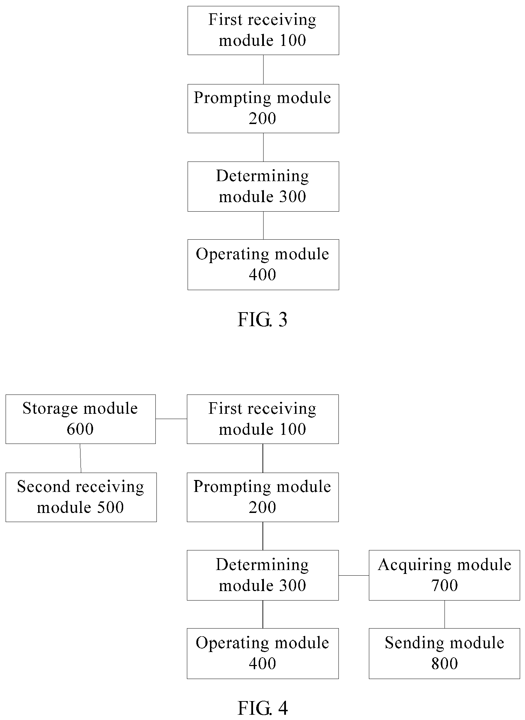

FIG. 3 is a schematic structural diagram of an apparatus for identifying a malicious operation in a mobile terminal according to an embodiment of the present disclosure. As illustrated in FIG. 3, the apparatus for identifying a malicious operation in a mobile terminal includes: a first receiving module 100, a prompting module 200, a determining module 300 and an operating module 400.

Specifically, the first receiving module 100 is configured to receive an operation of a user on a mobile terminal. The mobile terminal may include, but not limited to, a mobile phone, a tablet computer, a lap-top computer and a PDA.

The prompting module 200 is configured to prompt the user to input an operation identification code when determining that the operation on the mobile terminal matches with a predetermined suspected malicious operation. The predetermined suspected malicious operation includes, but not limited to, one of initially starting the mobile terminal, resetting the mobile terminal, upgrading the mobile terminal, updating a system of the mobile terminal and modifying a habitual operation on the mobile terminal. Specifically, after the first receiving module 100 receives an operation of a user, the prompting module 200 determines whether the operation performed by the user for the mobile terminal is a suspected malicious operation.

To be specific, the prompting module 200 may match the operation performed by the user with a pre-stored suspected malicious operation in the mobile terminal, so as to identify whether the operation performed by the user is a suspected malicious operation. If the prompting module 200 identifies that the operation performed by the user for the mobile terminal is initially starting the mobile terminal, resetting the mobile terminal, upgrading the mobile terminal, selecting to updating the system of the mobile terminal, modifying the habitual operation of the mobile terminal (for example, assuming an authorized user generally unlocks the mobile terminal by using authorized fingerprint A, and if the mobile terminal identifies that an unauthorized fingerprint B is used for unlocking the mobile terminal, the mobile terminal determines that a habitual operation of the user on the mobile terminal has been modified), or recovering the mobile terminal, the prompting module 200 prompts the user to input the operation identification code to authenticate identity of the user.

The determining module 300 is configured to receive the operation identification code, and determine whether the operation identification code matches with a predetermined anti-malicious operation identification code. The anti-malicious operation identification code includes, but not limited to one of a fingerprint, a living fingerprint and an iris of an authorized user, as well as one or any combination of a digit, a letter and a symbol. To be specific, the determining module 300 may match the operation identification code input by the user with the predetermined anti-malicious operation code, to determine whether the user performing a suspected operation for the mobile terminal is an authorized user. The predetermined anti-malicious operation identification code may be pre-stored in the mobile terminal, and more particularly, stored in a secure space of the mobile terminal. That is, the predetermined anti-malicious operation identification code is stored in a storage space that cannot be accessed or destroyed by a malicious operation; in other words, stored in a storage space for which an unauthorized user may be incapable of performing any adding, deleting or modify operation. Hence, it can be ensured that the predetermined anti-malicious operation identification code would not suffer lost, being deleted or destroyed.

For example, the determining module 300 receives an input fingerprint of a user, and then compares the input fingerprint with an authorized user fingerprint that is pre-stored in a secure space of the mobile terminal. If the fingerprints do not match, the determining module 300 determines that the user is an unauthorized user, that is, the user performing a suspected malicious operation for the mobile terminal is an unauthorized user. Alternatively, the judging module 300 receives an input password of user, and then compares the input password with a pre-stored password in a secure space of the mobile terminal. If the two passwords match, the determining module 300 determines that the user performing a suspected malicious operation for the mobile terminal is an authorized user.

It should be understood that the determining module 300 may not only determine whether the user is an unauthorized user by identifying whether the fingerprints match, but also identify identity of the user by using other biometrics, such as an iris and the like of the user.

The operating module 400 is configured to operate the mobile terminal to perform a predetermined operation if the operation identification code does not match with the predetermined anti-malicious operation identification code. The predetermined operation includes, but not limited to, one of automatic shutdown, pop-up alarming and sending information of an unauthorized user. Specifically, if the determining module 300 determines that the operation identification code input by the user does not match with the predetermined anti-malicious operation identification code, it indicates that an unauthorized user has performed a malicious operation for the mobile terminal. In this case, the operating module 400 may perform a predetermined operation in time. For example, the operating module 400 may automatically shut off the mobile terminal, or the operating module 400 may pop up an alert box to the user or automatically send information of the unauthorized user to the authorized user. The information of the unauthorized user includes, but not limited to, identity information, geographic location information, mobile phone number, fingerprint information, or the like of the unauthorized user. The recipient of the information of the unauthorized user sent by the mobile terminal may be an authorized user of the mobile terminal, a designated receiving apparatus/mobile terminal or the like of the mobile terminal.

With the apparatus for identifying a malicious operation in a mobile terminal according to the embodiments of the present disclosure, when a mobile terminal identifies a suspected malicious operation, a user is prompted to input an operation identification code, and an unauthorized user performing a malicious operation on the mobile terminal can be identified by determining whether the operation identification code input by the user matches with a predetermined anti-malicious operation identification code. In this way, the mobile terminal makes a response in time.

FIG. 4 is a schematic structural diagram of an apparatus for identifying a malicious operation in a mobile terminal according to a specific embodiment of the present disclosure. As illustrated in FIG. 4, the apparatus for identifying a malicious operation in a mobile terminal includes: a first receiving module 100, a prompting module 200, a determining module 300 and an operating module 400.

Specifically, a second receiving module 500 is configured to receive an anti-malicious operation identification code input by an authorized user. Specifically, the second receiving module 500 may prompt the authorized user to register one or more anti-malicious operation identification codes when the system is ensured to be secure. For example, when the anti-malicious function is not activated or a security mechanism of the mobile terminal determines that the mobile terminal is secure, the mobile terminal prompts the authorized user to register an authorized fingerprint or input a password.

A storage module 600 is configured to store the anti-malicious operation identification code as a predetermined anti-malicious operation identification code in a secure storage space of the mobile terminal. Afterwards, the storage module 600 may store the anti-malicious operation identification code registered by the authorized user in a secure storage space of the mobile terminal. The secure storage space refers to a space which would not suffer lost, being deleted or destroyed when the mobile terminal is maliciously operated. For example, if the anti-malicious operation identification code registered by the authorized user is a fingerprint, the fingerprint of the authorized user may be stored in a storage device of a fingerprint chip.

In addition, the storage module 600 may also send the anti-malicious operation identification code registered by the authorized user to a server of a service provider or a system provider for storage. When the determining module 300 receives an operation identification code input by a user performing a suspected malicious operation for the mobile terminal, the determining module 300 may download the anti-malicious operation identification code from the server for matching and authentication.

The acquiring module 700 is configured to acquire geographic location information of the mobile terminal. Specifically, if the determining module 300 determines that the operation identification code does not match with the predetermined anti-malicious operation identification code, that is, an unauthorized user has performed a suspected malicious operation for the mobile terminal, the acquiring module 700 may acquire geographic location coordinates of the mobile terminal by using, for example, a GPS module.

A sending module 800 is configured to send the geographic location information to the authorized user. Specifically, the sending module 800 may send the geographic location coordinates of the mobile terminal to the authorized user in various ways. For example, the sending module 800 sends the geographic location coordinates to the server of the service provider or system provider, and he server pushes the geographic location coordinates to the authorized user via, for example, a secure email; or the sending module 800 may directly edit, in the mobile terminal, a secure email including the geographic location coordinates, or notify the geographic location coordinates to the authorized user via a short message or the like. As such, the authorized user may acquire the current geographic location of the mobile terminal.

With the apparatus for identifying a malicious operation in a mobile terminal according to the embodiment of the present disclosure, a mobile terminal acquires geographic location information of the mobile terminal and sends the geographic location information to a server, and the server pushes the geographic location information to an authorized user. As such, the authorized user may timely acquire relevant information of the mobile terminal after the mobile terminal is missing or stolen, and a malicious operation is performed on the mobile terminal by an unauthorized user.

It should be understood that each part of the present disclosure may be implemented by using hardware, software, firmware or a combination of them. In the above embodiments, the multiple steps or methods may be implemented by using software or firmware which is stored in a memory and executed by a suitable instruction execution system. For example, if the multiple steps or methods are implemented by using hardware, similar to another embodiment, the steps or methods may be implemented by using any one or a combination of the following technologies that are commonly known in the art: a discrete logic circuit of a logic gate circuit configured to implement logic function to data signals, an application specific integrated circuit having a suitable combinational logic gate, a programmable gate array (PGA), a field-programmable gate array (FPGA), and the like.

Although the embodiments of the present disclosure are described in detail above, persons or ordinary skill in the art may understand that without departing from the principle and intention of the present disclosure, various variations, modifications and replacements may be made to these embodiments, and the scope of the present disclosure is defined by the appended claims and their equivalents.

### Industrial Applicability

With the method and apparatus for identifying a malicious operation in a mobile terminal according to the present disclosure, a mobile terminal acquires geographic location information of the mobile terminal and sends the geographic location information to a server, and the server pushes the geographic location information to an authorized user. As such, the authorized user may timely acquire relevant information of the mobile terminal after the mobile terminal is missing or stolen and an unauthorized user performs a malicious operation on the mobile terminal.

## Claims

1. A method for identifying a malicious operation in a mobile terminal, comprising:
receiving an operation of a user on a mobile terminal;
prompting the user to input an operation identification code when determining that the operation on the mobile terminal matches with a predetermined suspected malicious operation;
receiving the operation identification code, and determining whether the operation identification code matches with a predetermined anti-malicious operation identification code; and
operating the mobile terminal to perform a predetermined operation if the operation identification code does not match with the predetermined anti-malicious operation identification code.

2. The method for identifying a malicious operation in a mobile terminal according to claim 1, wherein prior to receiving an operation of a user on a mobile terminal, the method further comprises:
receiving an anti-malicious operation identification code input by an authorized user, and
storing the anti-malicious operation identification code as the predetermined anti-malicious operation identification code in a secure storage space of the mobile terminal.

3. The method for identifying a malicious operation in a mobile terminal according to claim 1, wherein upon operating the mobile terminal to perform a predetermined operation, the method further comprises:
acquiring geographic location information of the mobile terminal, and
sending the geographic location information to the authorized user.

4. The method for identifying a malicious operation in a mobile terminal according to any one of claims 1 to 3, wherein the anti-malicious operation identification code comprises one of a fingerprint, a living fingerprint and an iris of an authorized user, and one or any combination of a digit, a letter and a symbol.

5. The method for identifying a malicious operation in a mobile terminal according to any one of claims 1 to 3, wherein the predetermined suspected malicious operation comprises one of initially starting the mobile terminal, resetting the mobile terminal, upgrading the mobile terminal, updating a system of the mobile terminal and modifying a habitual operation on the mobile terminal (wherein modifying the habitual operation refers to, for example, when a fingerprint A is constantly used for unlocking the mobile terminal, identifying abruptly that the mobile terminal is attempted to unlock by using a new fingerprint B).

6. The method for identifying a malicious operation in a mobile terminal according to any one of claims 1 to 3, wherein the predetermined operation comprises one of automatic shutdown, pop-up alarming and sending information of an unauthorized user.

7. An apparatus for identifying a malicious operation in a mobile terminal, comprising:
a first receiving module, configured to receive an operation of a user on a mobile terminal;
a prompting module, configured to prompt the user to input an operation identification code when determining that the operation on the mobile terminal matches with a predetermined suspected malicious operation;
a determining module, configured to receive the operation identification code, and determine whether the operation identification code matches with a predetermined anti-malicious operation identification code; and
an operating module, configured to operate the mobile terminal to perform a predetermined operation if the operation identification code does not match with the predetermined anti-malicious operation identification code.

8. The apparatus for identifying a malicious operation in a mobile terminal according to claim 7, further comprising:
a second receiving module, configured to receive an anti-malicious operation identification code input by an authorized user; and
a storage module, configured to store the anti-malicious operation identification code as a predetermined anti-malicious operation identification code in a secure storage space of the mobile terminal.

9. The apparatus for identifying a malicious operation in a mobile terminal according to claim 7, further comprising:
an acquiring module, configured to acquire geographic location information of the mobile terminal; and
a sending module, configured to send the geographic location information to the authorized user.

10. The apparatus for identifying a malicious operation in a mobile terminal according to any one of claims 7 to 9, wherein the anti-malicious operation identification code comprises one of a fingerprint, a living fingerprint and an iris of an authorized user, and one or any combination of a digit, a letter and a symbol.

11. The apparatus for identifying a malicious operation in a mobile terminal according to any one of claims 7 to 9, wherein the predetermined suspected malicious operation comprises one of initially starting the mobile terminal, resetting the mobile terminal, upgrading the mobile terminal, updating a system of the mobile terminal and modifying a habitual operation on the mobile terminal.

12. The apparatus for identifying a malicious operation in a mobile terminal according to any one of claims 7 to 9, wherein the predetermined operation comprises one of automatic shutdown, pop-up alarming and sending information of an unauthorized user.
